# EUROPEAN PATENT SPECIFICATION

(11) **EP 0 965 476 B1**
(45) Date of publication and mention of the grant of the patent: **27.08.2003**
(21) Application number: 99304625.9
(22) Date of filing: 15.06.1999
(51) Int. Cl.: B60K 17/00, B62D 21/15

(54) **A vehicle transmission support cross member**
Querträger für Kraftfahrzeuggetriebebefestigung
Traverse de support pour transmission du véhicule

(30) Priority: 16.06.1998 JP 16820798
(43) Date of publication of application: 22.12.1999
(73) Proprietor: FUJI JUKOGYO KABUSHIKI KAISHA, Tokyo (JP)
(72) Inventor: Murata, Makoto, c/o Fuji Jukogyo K.K., Tokyo 160-0023 (JP); Maeno, Kazuhiro, c/o Fuji Jukogyo K.K., Tokyo 160-0023 (JP); Okuno, Tatsuya, c/o Fuji Jukogyo K.K., Tokyo 160-0023 (JP)
(74) Representative: Kemp, Paul Geoffrey

(56) References cited:
- US-A- 4 856 751
- PATENT ABSTRACTS OF JAPAN vol. 1998, no. 03, 27 February 1998 (1998-02-27) -& JP 09 300995 A (DAIHATSU MOTOR CO LTD), 25 November 1997 (1997-11-25)
- PATENT ABSTRACTS OF JAPAN vol. 1995, no. 08, 29 September 1995 (1995-09-29) -& JP 07 117502 A (MAZDA MOTOR CORP), 9 May 1995 (1995-05-09)
- PATENT ABSTRACTS OF JAPAN vol. 1998, no. 03, 27 February 1998 (1998-02-27) -& JP 09 300996 A (NISSAN MOTOR CO LTD), 25 November 1997 (1997-11-25)
- PATENT ABSTRACTS OF JAPAN vol. 018, no. 496 (M-1674), 16 September 1994 (1994-09-16) -& JP 06 166379 A (SUZUKI MOTOR CORP), 14 June 1994 (1994-06-14)

## Description

The present invention relates to a vehicle cross member structure for a transmission and more specifically to a vehicle cross member structure capable of preventing a transmission or a propeller shaft from projecting into a passenger compartment in a collision.

In a conventional motor vehicle, various cross members are utilised such as a cross member traversing between left and right front suspension, a cross member traversing between left and right rear suspension, a cross member traversing a transmission. The present invention relates to a cross member traversing a transmission. The object of such a cross member traversing a transmission (hereinafter, referred to as just "cross member") is to reinforce left and right side frames and at the same time to hold a power train including a transmission from underneath. Another object of the cross member is to protect an occupant from injury by the transmission projecting into the passenger compartment in a collision. To achieve this the cross member is such that the transmission and engine are disconnected from the body to fall down in the event of an impact.

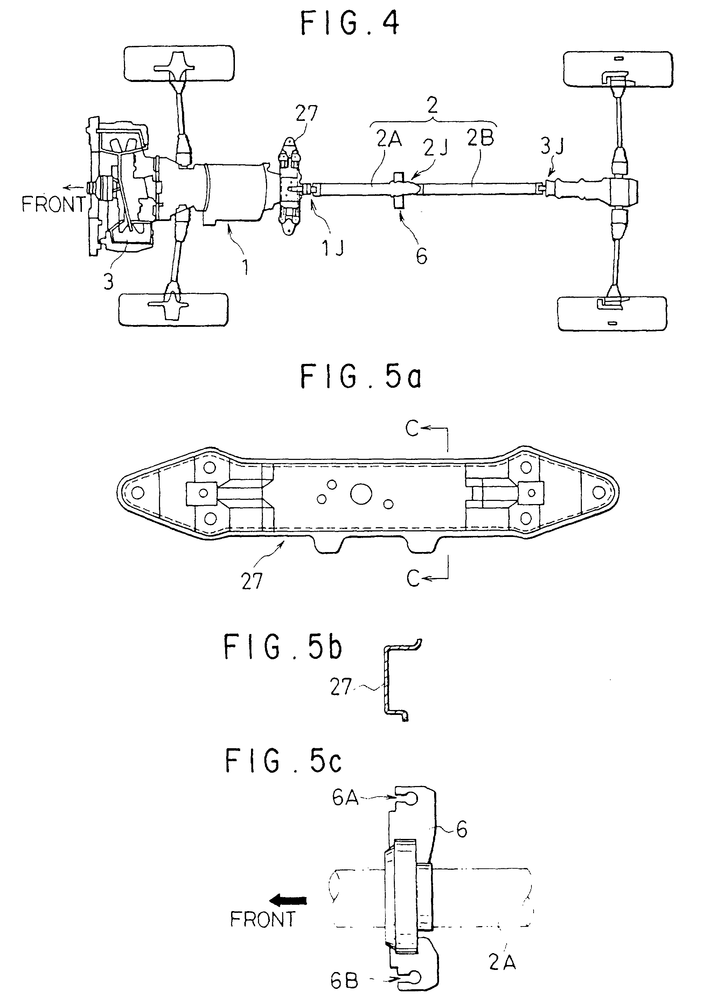

Figures 4 to 5b show a typical example of a cross member utilised in a power train system of a vehicle, in which a transmission 1 having an engine 3 in front and a propeller shaft 2 in rear is supported by a cross member 27 traversing between left and right side frames (not shown). The propeller shaft 2 comprises a first joint 1J connected to the output shaft of the transmission 1, a second joint 2J provided between a front shaft 2A and a rear shaft 2B and a third joint 3J connected to a rear differential and is suspended from a floor panel by a bracket 6 in the vicinity of the second joint 2J.

As shown in Figure 5b, the cross member 27 has a U-shaped cross section opening downwardly. As shown in Figure 5c, an intermediate part of the propeller shaft 2 is supported by the bracket 6 which is mounted on the floor panel by mounting bolts through bolt holes 6A, 6B opening toward the front of the vehicle, so that the bracket 6 is detached from the mounting bolts when an impact is applied to the propeller shaft 2.

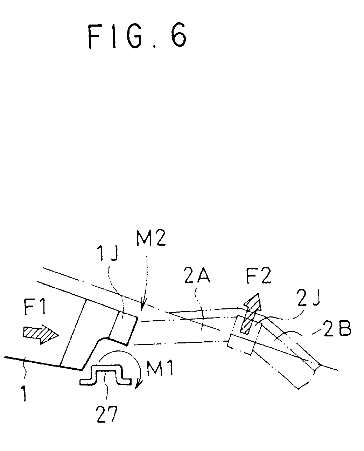

As shown in Figure 6, since the cross member 27 has a U-shaped cross section opening downwardly, when an impulse F1 is applied to the transmission 1, a moment M1 is caused which rotates the upper surface of the cross member 27 rearwardly. As a result, a moment M2 is exerted on the first joint 1J in such a manner that it is projected down. An upward force F2 is applied at the intermediate part of the propeller shaft 2 which pushes the second joint 2J up towards vehicle driver/passenger compartment.

In order to obviate such a defect, Japanese examined Utility Model Application No. Jitsu-Ko-Hei 2-45062 and Japanese Patent Application Laid-Open No. Toku-Kai-Hei 6-166379 propose a closed cross section (box section) structure of the cross member. A transmission support cross member and structure according to the preambles of claims 1 and 6 is known from JP-7-117502. As is well known, since the closed cross section structure is resistant to torsion, the transmission is displaced in the direction of an impact. The propeller shaft is therefore prevented from projection toward the floor panel. However, the closed cross section member structure relying only upon a resistance to torsion is still insufficient for stably displacing the transmission rearwardly when an impact is applied to the transmission.

It is an object of the present invention to provide a vehicle transmission cross member capable of absorbing an impact load according to the magnitude of the impact load and finally dropping the transmission to protect occupants.

In order to attain the object, the present invention provides a vehicle transmission cross member as defined in claim 1.

According to a second aspect of the present invention there is provided a vehicle cross member constructed in accordance with claim 6.

A vehicle cross member constructed in accordance with the present invention will now be described by way of example with reference to the accompanying figures in which:
Figure 1a is a sectional plan view showing a connecting portion of a cross member with a side frame,
Figure 1b is a cross sectional elevation along the line B-B in Figure 1a;
Figure 2a is a plan view of the cross member,
Figure 2b is a cross sectional view taken along the line A-A in Figure 2a;
Figures 3a to 3d are diagrammatic views showing states of deformation of a power train,

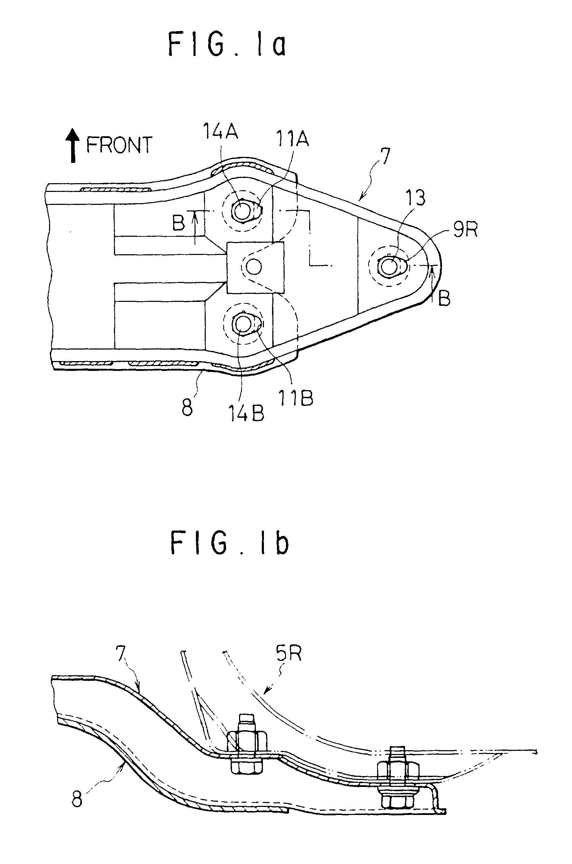

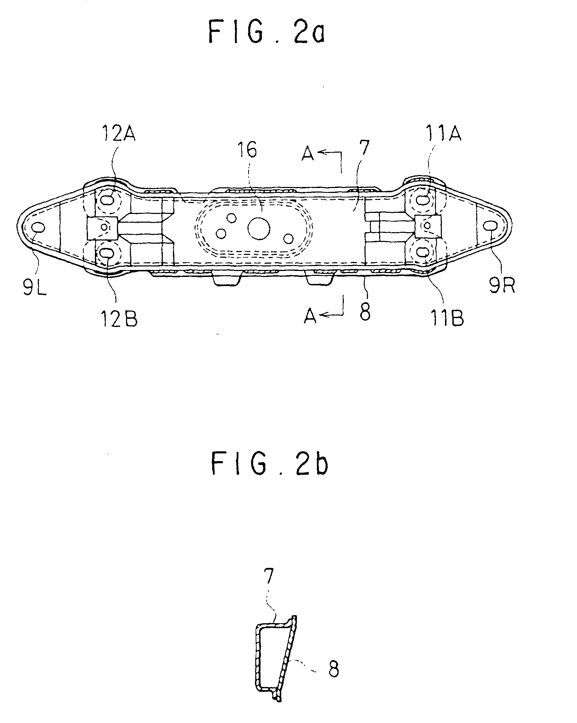

Referring now to Figure 2a, a cross member 7 is connected at left and right ends thereof with left and right side frames extending in the longitudinal direction of a vehicle. Figure 1b indicates a cross member connected at a right end thereof with a right side frame 5R.

A cushion rubber 16 is disposed on the upper surface of the central portion of the cross member 7. A transmission 1 is mounted on the cushion rubber 16 and a propeller shaft 2 extends from the rear of the transmission in an orthogonal relationship with the cross member 7.

Since the cross member 7 is bent upwardly at the portion connecting with the side frame 5R as shown in Figure 1b, the transmission is supported at a higher position than the connecting portion. The cross member 7 forms a closed cross section structure extending laterally as shown in Figure 2b by welding a lower plate 8 from underneath to the cross member 7 having a U-shaped cross section downwardly opening.

As shown in Figure 1a, the cross member 7 is connected at both ends thereof with the side frame 5R (5L) by three mounting bolts 13, 14A, 14B arranged triangularly (similarly arranged on the left side). Preferably, these three mounting bolts 13, 14A, 14B are arranged such that the bolt 13 is located at the tip portion of the cross member 7 and a pair of mounting bolts 14A, 14B aligned in a longitudinal direction of the vehicle are located at a position closer to the centre of the vehicle.

In this embodiment, bolt holes 9R, 11A, 11B of the cross member 7 which the mounting bolts 13, 14A, 14B go through are slot shaped and extend outwardly in the transverse direction of the vehicle.

The closed cross section structure (box section) is formed throughout the cross member 7 extending laterally between the left and right pair of mounting bolts. That is, as illustrated in Figures 1a, 1b, the lower plate 8 is disposed underneath of the cross member 7 covering the right and left slotted bolt holes 11A, 11B, 12A, 12B.

In a normal running of the vehicle, vibrations transmitted from a road to the engine and vibrations and noise transmitted from the engine to the body, are effectively absorbed by engine mounts (not shown) and the cushion rubber 16 of the cross member 7.

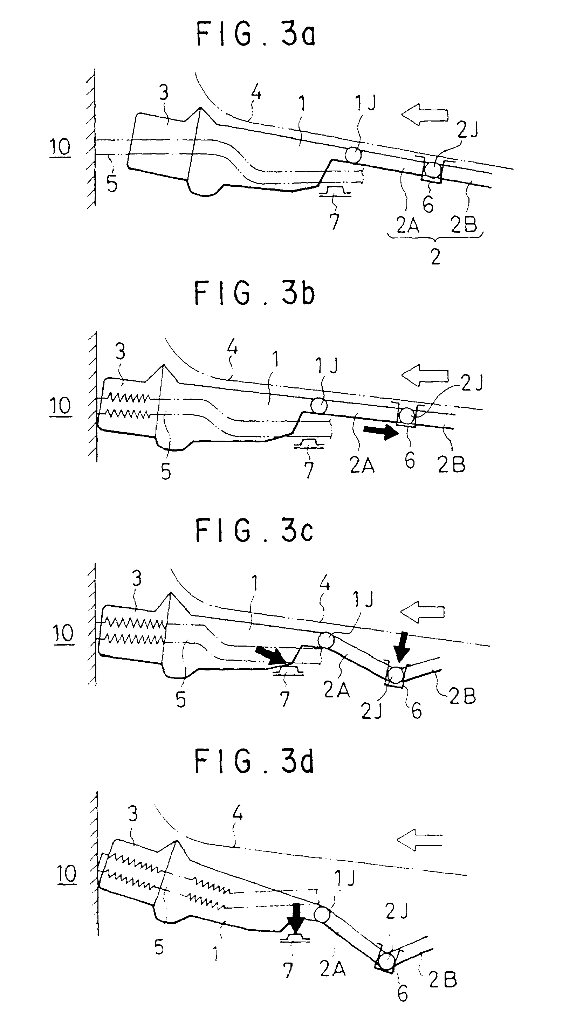

Figures 3a through 3d are schematic drawings showing the state of the power train at the event of a collision. First, Figure 3a shows an instance when the vehicle collides against an obstacle 10, in which the relative positions of the power train components such as the engine 3, the transmission 1 and the propeller shaft 2, with respect to the floor panel of the vehicle are retained. The side frame 5 is displaced rearwardly while being deformed to some extent until the impact load reaches a first impact load. Then, the engine 3 and the transmission 1 receive a force displacing them forwards.

As shown in Figure 3b, when the impact load exceeds the first impact load, the engine 3 and the transmission 1 impact against the obstacle 10 to produce an impact load and as a result the impact load is transmitted to the propeller shaft 2 to displace the propeller shaft 2 rearwardly. Then, the bracket 6 for securing the second joint 2J to the body is displaced along the bolt holes 6A, 6B (refer to Figure 5c).

On the other hand, a force to rotate the cross member 7 rearwardly around an axis connecting the left and right mounting bolts on the tip side of the cross member 7 and also a force to bend the cross member 7 rearwardly around the respective left and right mounting bolts on the tip side of the cross member 7, are exerted on the cross member 7. As a result, the mounting bolt 14A receives a force to part the cross member 7 from the side frame 5R and at the same time the cross member 7 is displaced along the slotted bolt holes 13, 14A, 14B.

As shown in Figure 3c, when the impact load exceeds a second impact load, the bracket 6 of the joint 2J is disconnected from the mounting bolts to fall down. As shown in Figure 3d, when the impact load exceeds a third impact load, the respective mounting bolts 13, 14A, 14B are broken or the slotted bolt holes 13, 14A, 14B are torn off and as a result the power train components including the engine 3 and the transmission 1 are broken away from the body.

Since the central portion of the cross member 7 is positioned higher than the left and right connecting portions with the left and right side frames, the central portion of the cross member 7 rotates around the left and right connecting portions to promote the dropout of the transmission from the body.

While the presently preferred embodiment of the present invention has been shown and described, it is to be understood that this disclosure is for the purpose of illustration and that various changes and modifications may be made without departing from the scope of the invention as set forth in the appended claims.

## Claims

1. A transmission support cross member (7) for a vehicle having left and right side frames (5) extending in a longitudinal direction comprising,
left and right connection portions located one at each end of the cross member (7) and
a central portion adapted to support a transmission (1),
each said connection portion having three bolt holes (9,11,12) arranged in a triangular pattern with a pair of bolt holes (11) forming the base of the triangle toward the central portion and disposed to extend in the longitudinal direction of a vehicle, **characterised in that** each said bolt hole (9,11,12) is slot shaped with the long axis of the slot disposed to extend laterally of the vehicle, and said cross member (7) is, at least in part, of box section.

2. A transmission support cross member according to claim 1, wherein the box section part of said cross member (7) extends transversely from a portion of the cross member (7) including the base of said triangular pattern having the pairs of bolt holes (11,12).

3. A transmission support cross member according to claim 1 or claim 2 wherein a region joining the central portion and the connection portion is bent so that the central portion for supporting the transmission will be higher than the connection portions when connected to the vehicle side frames (5).

4. A transmission support cross member according to any one of claims 1 to 3 in combination with a vehicle having side frames (5) each having a connection portion comprising a pair of bolts (14) disposed at the base of a triangular pattern relatively towards the centre of the vehicle and a third bolt (13) at the apex of the triangular pattern, said bolts (13,14) being received one each into said bolt holes (9,11,12) in said connection portions of said cross member (7) such that each bolt (13, 14) is located at the end of the slot shaped bolt hole (9,11,12) towards the centre of the vehicle.

5. A transmission support cross member in accordance with claim 4 wherein said central portion of said cross member rises from each said connection portion and supports a transmission (1) having a propeller shaft (2) extending rearwardly.

6. A vehicle cross member structure traversing between left and right side frames (5) extending in a longitudinal direction of a vehicle for mounting a transmission (1) having a propeller shaft in rear (2), comprising:
a cross member (7) having a closed cross section structure extending in a transverse direction of said vehicle, connected at left and right ends thereof with said left and right frames (5) respectively and connected at a central portion thereof with said transmission (1);
two sets of three mounting bolts (13,14) disposed in a triangular relationship for mounting said cross member (7) on said left and right side frames (5) respectively, said mounting bolts (13,14) comprising a mounting bolt (13) disposed at a left and right end portion thereof respectively and a remaining pair of said mounting bolts (14) aligned in a longitudinal direction of said vehicle and disposed at a left and right portion near to a central portion of said cross member respectively; and
bolt holes (9,11,12) on said cross member (7) for receiving said respective mounting bolts (13,14) therethrough
**characterised in that** the bolt holes are provided by slots extending in an outward and transverse direction of said vehicle

7. The vehicle cross member structure according to claim 6, wherein
said closed cross section structure is formed in a transverse direction of said vehicle within a range at least including a portion wherein said pair of mounting bolts (14) are disposed.

8. The vehicle cross member structure according to claim 6 or 7, wherein
said cross member is bent upwardly at a connecting portion thereof with said left and right side frames so that said central portion is located higher than said connecting portion.

## Patentansprüche

1. Getriebebefestigungs-Querträger (7) für ein Kraftfahrzeug mit sich in eine longitudinale Richtung erstreckende linke und rechte Seitenrahmen (5), enthaltend
linke und rechte Verbindungsbereiche, die sich jeweils an einem Ende des Querträgers (7) befinden, und
einen Zentralbereich, der zur Befestigung eines Getriebes (1) angepaßt ist,
wobei jeder Verbindungsbereich drei Bolzen (9,11,12) aufweist, die in einem dreieckigen Muster mit einem Paar von Bolzenlöchern (11) angeordnet sind, um die Basis des Dreieckes zu bilden in Richtung des zentralen Bereiches und angeordnet, um sich in die longitudinale Richtung eines Fahrzeuges zu erstrecken, **dadurch gekennzeichnet, daß** jedes Bolzenloch (9,11,12) schlitzförmig ist mit der Längsachse des angeordneten Schlitzes, um sich seitlich vom Fahrzeug zu erstrecken, und wobei der Querträger (7) wenigstens teilweise aus einem Kastenquerschnitt besteht.

2. Getriebebefestigungsquerträger nach Anspruch 1, wobei der Kastenquerschnittsteil des Querträgers (7) sich transversal von einem Bereich des Querträgers (7) erstreckt, einschließend die Basis des dreieckigen Musters mit den Paaren an Bolzenlöchern (11,12).

3. Getriebebefestigungsquerträger nach Anspruch 1 oder 2, wobei eine den zentralen Bereich und den Verbindungsbereich verbindender Bereich gebogen ist, so daß der zentrale Bereich zum Befestigen des Getriebes höher ist als die Verbindungsbereiche bei Verbinden an den Fahrzeugseitenrahmen (5) .

4. Getriebebefestigungsquerträger nach einem der Ansprüche 1 bis 3 in Kombination mit einem Fahrzeug mit Seitenrahmen (5), die jeweils einen Verbindungsbereich aufweisen, enthaltend ein Bolzenpaar (14), das an der Basis eines dreieckigen Musters relativ in Richtung auf das Zentrum des Fahrzeuges angeordnet ist, und einen dritten Bolzen (13) an der Spitze des dreieckigen Musters, wobei die Bolzen (13,14) jeweils in den Bolzenlöchern (9,11,12) aufgenommen werden in den Verbindungsbereichen des Querträgers (7), so daß jeder Bolzen (13,14) angeordnet ist am Ende des schlitzförmigen Bolzenloches (9,11,12) in Richtung des Zentrums des Fahrzeugs.

5. Getriebebefestigungsquerträger nach Anspruch 4, wobei der zentrale Bereich des Querträgers sich von jedem Verbindungsbereich erhebt und ein Getriebe (1) trägt mit einer sich nach hinten erstreckenden Gelenkwelle (2) .

6. Fahrzeugquerträgerstruktur, die zwischen linken und rechten Seitenrahmen (5) verläuft, sich in eine longitudinale Richtung eines Fahrzeugs erstreckend zum Befestigen eines Getriebes (1) mit einer rückseitigen Gelenkwelle (2), enthaltend:
einen Querträger (7) mit einer geschlossenen Querschnittsstruktur, die sich in einer transversalen Richtung des Fahrzeugs erstreckt, davon an linken und rechten Enden mit den linken bzw. rechten Rahmen (5) verbunden und davon an einem zentralen Bereich mit dem Getriebe (1) verbunden;
zwei Sätze von drei Befestigungsbolzen (13,14), die in einer dreieckigen Relation angeordnet sind zum Befestigen des Querträgers (7) an den linken bzw. rechten Seitenrahmen (5), wobei die Befestigungsbolzen (13,14) einen Befestigungsbolzen (13) aufweisen, der angeordnet ist an einem linken bzw. rechten Endbereich, und ein verbleibendes Paar an Befestigungsbolzen (14), die in einer longitudinalen Richtung des Fahrzeuges ausgerichtet sind und angeordnet sind an einem linken bzw. rechten Bereich in der Nähe zu einem zentralen Bereich des Querträgers; und
Bolzenlöcher (9,11,12) an dem Querträger (7) zum Aufnehmen der entsprechenden Befestigungsbolzen (13,14), **dadurch gekennzeichnet, daß** die Bolzenlöcher bereitgestellt werden durch Schlitze, die sich in einer nach außen führenden und transversalen Richtung des Fahrzeuges erstrecken.

7. Fahrzeugquerträgerstruktur nach Anspruch 6, wobei die geschlossene Querschnittsstruktur gebildet ist in einer transversalen Richtung des Fahrzeuges innerhalb eines Bereiches, der wenigstens einen Bereich einschließt, in dem das Paar Befestigungsbolzen (14) angeordnet ist.

8. Fahrzeugquerträgerstruktur nach Anspruch 6 oder 7, wobei der Querträger an einem Verbindungsbereich mit den linken und rechten Seitenrahmen nach oben gebogen ist, so daß der zentrale Bereich höher angeordnet ist als der Verbindungsbereich.

## Revendications

1. Traverse de support de transmission (7) pour un véhicule ayant des cadres latéraux gauche et droit (5) s'étendant dans un sens longitudinal comprenant,
des parties de raccord gauche et droite situées chacune de chaque extrémité de la traverse (7) et
une partie centrale adaptée pour supporter une transmission (1),
ce que l'on appelle chaque partie de raccord ayant trois trous de boulon (9, 11, 12) agencés dans un modèle triangulaire avec une paire de trous de boulon (11) formant la base du triangle vers la partie centrale et disposés pour s'étendre dans le sens longitudinal d'un véhicule, **caractérisée en ce que** l'on appelle chaque trou de boulon (9, 11, 12) a la forme d'une fente avec l'axe long de la fente agencé pour s'étendre de façon latérale par rapport au véhicule, et ladite traverse (7) provient, au moins en partie, de la section en caisson.

2. Traverse de support de transmission selon la revendication 1, dans laquelle la partie de la section de caisson de ladite traverse (7) s'étend de façon transversale à partir d'une partie de la traverse (7) comprenant la base dudit modèle triangulaire ayant les paires de trous de boulon (11, 12).

3. Traverse de support de transmission selon la revendication 1 ou 2, dans laquelle une région rejoignant la partie centrale et la partie de raccord est pliée de façon à ce que la partie centrale destinée à supporter la transmission soit plus élevée que les parties de raccord lorsqu'elle est raccordée aux cadres latéraux du véhicule (5).

4. Traverse de support de transmission selon l'une quelconque des revendications 1 à 3 en combinaison avec un véhicule ayant des cadres latéraux (5), chacun ayant une partie de raccord comprenant une paire de boulons (14) disposée à la base d'un modèle triangulaire relativement vers le centre du véhicule et un troisième boulon (13) au sommet du modèle triangulaire, lesdits boulons (13, 14) étant logés chacun dans lesdits trous de boulon (9, 11, 12) dans lesdites parties de raccord de ladite traverse (7) de telle sorte que chaque boulon (13, 14) soit situé à l'extrémité du trou de boulon en forme de fente (9, 11, 12) vers le centre du véhicule.

5. Traverse de support de transmission selon la revendication 4, dans laquelle ladite partie centrale de ladite traverse s'élève à partir de chaque partie de raccord et supporte une transmission (1) ayant un arbre de transmission (2) s'étendant vers l'arrière.

6. Structure de la traverse de véhicule traversant entre les cadres latéraux gauche et droite (5) s'étendant dans le sens longitudinal d'un véhicule pour monter une transmission (1) ayant un arbre de transmission à l'arrière (2), comprenant :
une traverse (7) ayant une structure transversale fermée s'étendant dans le sens transversal dudit véhicule, raccordée aux extrémités gauche et droite de ce dernier avec les cadres latéraux gauche et droit (5) respectivement et raccordée à une partie centrale de ce dernier avec ladite transmission (1) ;
deux jeux de trois boulons de montage (13, 14) disposés dans un rapport triangulaire pour monter ladite traverse (7) sur lesdits cadres latéraux gauche et droit (5), respectivement, lesdits boulons de montage (13, 14) comprenant un boulon de montage (13) disposé à une partie de l'extrémité gauche et droite de cette dernière respectivement et une paire restante desdits boulons de montage (14) alignée dans un sens longitudinal dudit véhicule et disposée au niveau d'une partie gauche et droite près d'une partie centrale de ladite traverse respectivement ; et
les trous de boulon (9, 11, 12) sur ladite traverse (7) pour loger lesdits boulons de montage respectifs (13, 14) à l'intérieur de ces derniers
**caractérisée en ce que** les trous de boulon sont fournis par des fentes s'étendant dans un sens extérieur et longitudinal dudit véhicule

7. Structure de la traverse de véhicule selon la revendication 6, dans laquelle
ladite structure transversale fermée est formée dans un sens transversal dudit véhicule à l'intérieur d'une plage comprenant au moins une partie dans laquelle ladite paire de boulons de montage (14) est disposée.

8. Structure de la traverse de véhicule selon la revendication 6 ou 7, dans laquelle
ladite traverse est pliée vers le haut au niveau d'une partie de raccord de cette dernière avec lesdits cadres latéraux gauche et droit de façon à ce que ladite partie centrale soit située plus haut que ladite partie de raccord.
